Europäisches Patentamt

European Patent Office

Office européen des brevets

(11) Publication number: · **0 110 689**
**B1**

# (12) EUROPEAN PATENT SPECIFICATION

(45) Date of publication of patent specification: 08.04.87

(21) Application number: 83307207.7

(22) Date of filing: 25.11.83

(51) Int. Cl.⁴: **H 04 N 5/44,** H 04 N 9/12, H 04 N 11/06

(54) Television receivers.

(30) Priority: 02.12.82 GB 8234321

(43) Date of publication of application:
13.06.84 Bulletin 84/24

(45) Publication of the grant of the patent:
08.04.87 Bulletin 87/15

(84) Designated Contracting States:
AT BE CH DE FR GB IT LI LU NL SE

(58) References cited:
DE-A-2 601 768
US-A-3 720 780
US-A-3 795 763

Nachrichtentechnische Zeitschrift, Band 30,
1977, Heft 2, Seiten 163-168 prospect of IBA
entitled Enhanced C-MAC

(73) Proprietor: THORN EMI Ferguson Limited
Thorn Emi House Upper Saint Martin's Lane
London, WC2H 9ED (GB)

(72) Inventor: Westwood, David John Sidney
109, Church Road
Potters Bar Hertfordshire (GB)
Inventor: Hastings, Joseph Francis Conway
2, Cillocks Close
Hoddesdon Hertfordshire, EN11 8QT (GB)

(74) Representative: Fleming, Ian Alexander et al
THORN EMI Patents Limited The Quadrangle
Westmount Centre Uxbridge Road
Hayes Middlesex, UB4 0HB (GB)

## Description

The present invention relates to a television receiver for use in a television transmission system in which the video information is in time-multiplexed form.

British Patent Specification No. 1518126 discloses various arrangements of conventional digital colour television systems in which the luminance signal is displayed at full line-scan period. In one form the luminance and chrominance components are separately digitised and recorded with the chrominance bits time-multiplexed and interspersed with the luminance words. In another form the chrominance words are recorded in the line flyback period.

One example of a time-multiplexed television system is that recently proposed by the Independent Broadcasting Authority and named the Multiplexed Analogue component (MAC) system, whereby the chrominance component of information within each line is separated in time from the luminance component. Thus, taking a line of 64 μsecs of video information in the correct sequence of transmission, there is an initial line sync word followed by a signal containing the audio information, these being of 11 μsecs in total duration, then a chrominance signal of 17.5 μsecs duration containing half the necessary colour information for that line (the chrominance information of the previous line constituting the remaining half); there follows a luminance signal ·of 35 μsecs containing the necessary brightness (or contrast) information for that line and terminated by another line sync word. Each television receiver has an information store into which the lines of information are put as they are received and a processor to take out the information necessary for each display line, when required, from the store.

The present invention provides a television receiver for use in a television transmission system incorporating time-multiplexed video signals wherein a video line has two separate time-multiplexed portions, being one portion of time-compressed chrominance information and another portion of time-compressed luminance information, the television receiver characterised by means to process at least the luminance poritons of the video signal for display in the time-compressed format, means to effect display of at least the luminance portions of the video signals with the luminance signals in their time-compressed format, the line scan of the receiver being of the same duration as that of the time-compresses luminance portion in each video line.

In one form of the present invention (applicable to colour television receivers), a television receiver has means to store the chrominance portion of lines of time-multiplexed video information, means to output the chrominance portion of a video line at a rate to result in a duration corresponding to that of that of the luminance portion, means to process the total colour information for each line with the luminance portion of the line in its time-compressed format.

Thus the receiver need only have a storage means of sufficient capacity to store and combine the chrominance signals. Also, there are no luminance signals to be taken from store by the processing means, which can hence have less sophisticated operations than otherwise. Both of these factors contribute towards a simplification of the operation of the receiver and can result in a reduction of the manufacturing cost.

The receiver has a line scan across the screen of the same duration as that of the luminance signal in each line of video information. Thus there need be no time length change in each luminance signal before display. As an example of this feature, a receiver which is compatible with the MAC system may have a line scan of 35 μsecs (as compared with the 64 μsec line scan of existing receivers).

In another form of the present invention (applicable to monochrome television receivers), a television receiver has means to display only the luminance portions in the video lines including means to synchronise the start of each line scan across the screen with the beginning of the luminance portion of a video line.

If the television system in operation is such that, within a line of video information, the luminance portion follows immediately after the line sync pulse, then preferably the synchronization means initiates the line scan upon detection of the line sync pulse. If however there is a time interval between the line sync pulse and the luminance ·portion, then preferably the synchronization means includes means to delay initiation of the line scan by an appropriate length of time. As an example of this latter feature, a receiver for use with the MAC system may have a delay means which operates for 28.5 μsecs,

In this form of the present invention the chrominance portion of each line is not used in the display.

Technical details on ways of achieving the above-described features of the present invention would be evident to a person skilled in the art.

In order that the invention may more readily be understood, a description is now given by way of example only, reference being made to the accompanying drawings, in which:

Figure 1 is a block diagram of a colour television receiver embodying the present invention; and

Figure 2 is a block diagram of a monochrome television receiver embodying the present invention.

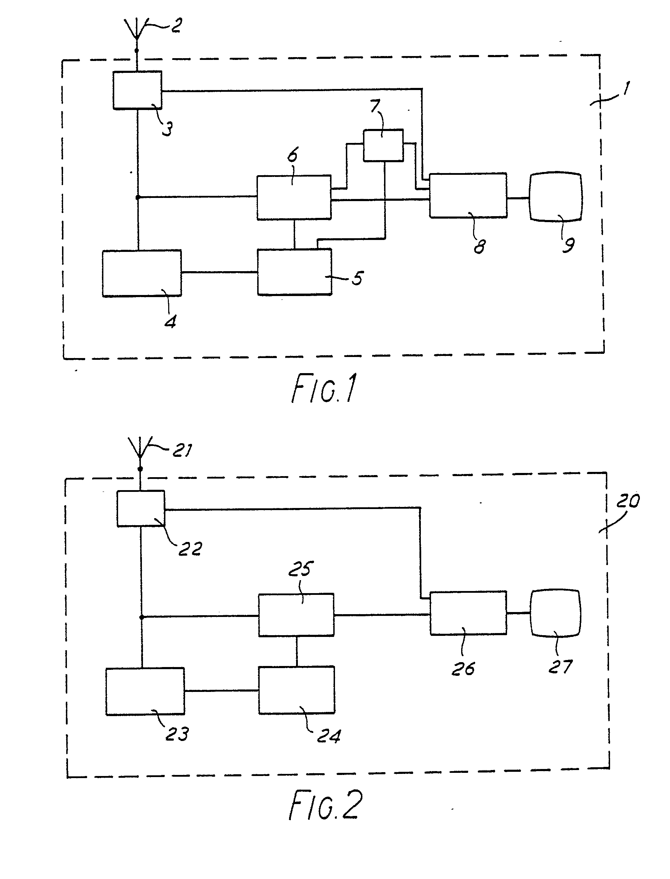

A colour television receiver 1, shown diagrammatically in Figure 1, has an aerial 2 to receive time-multiplexed video signals of a form corresponding to that of the MAC television transmission system. Audio processor 3 monitors the received signal and, when it identifies a line sync word, it separates out the audio component and sends the remaining signal on to control unit 4. This control unit detects the line sync word, delays for 11 μsecs and then sends a control pulse to reset to zero a counter 5 formed by one or more monostable circuits. Counter 5 produces a first timing pulse at the end of the period originally containing the audio component to activate a switch 6 which then directs the incoming video (which comprises the chrominance portion) to two separate sections of a colour information store 7. The first of these sections simultaneously receives, from a third section of store 7, the chrominance portions of the previous line of video information received, the resultant combination of the two chrominance portions providing all the colour information necessary for one display line. The second of the two sections to receive the incoming chrominance portion retains it for combination with the successive chrominance portion of the next display line.

Counter 5 produces a second timing pulse 17.5 μsecs after the first (thereby corresponding with the end of the chrominance portion of the line of video information); this pulse is passed to switch 6 in order to halt flow of the incoming signal to store 7 and instead to pass the signal (which is now the luminance portion of the line) to a video processing unit 8.

The second timing pulse is also used to instruct the third section of store 7 to clock out all the chrominance information necesary for the display line, at half the input rate, to the unit 8 for combination with the incoming luminance; the resultant signal is then displayed on a screen 9 with a suitably synchronized audio accompaniment.

Thus, the store 7 need only be large enough to accommodate and combine the chrominance portion of two lines of video information, rather than two entire lines, thereby minimising the cost for this component.

Figure 2 shows diagrammatically the major components in a monochrome television receiver 20 embodying the present invention.

Receiver 20 includes an aerial 21 to receive video signals in the MAC format and an audio processor 22 which monitors the received signal. When processor 22 identifies a line sync signal, it separates out the audio component and sends on the remaining signal. When control unit 23 detects the line sync signal, it sends out a control pulse to a counter 24 which is therby reset to zero and produces a first timing pulse. This timing pulse is passed to a switch 25 so as to set it (if it were not already so) in a mode whereby it prevents the passage of any incoming signals.

Counter 24 produces a second timing pulse 28.5 μsecs later (thereby corresponding with the end of the chrominance portion of the line of video information); this pulse is passed to switch 25 which is thereby activated in order to allow the incoming video signal (which is now solely the luminance portion of the line) to pass onto the video proscssing unit 26 for display on screen 27 with a suitably synchronised audio accompaniment.

## Claims

1. A television receiver for use in a television transmission system incorporating time-multiplexed video signals wherein a video line has two separate time-multiplexed portions, being one portion of time-compressed chrominance information and another portion of time-compressed luminance information, the television receiver (1,20) characterised by means (3—8,22—6) to process at least the luminance portions of the video signal for display in the time-compressed format, means (9,27) to effect display of at least the luminance portions of the video signals with the luminance signals in their time-compressed format, the line scan of the receiver (1,20) being of the same duration as that of the time-compressed luminance portion in each video line.

2. A television receiver according to Claim 1, characterised by means (7) to store the chrominance portion of lines of time-multiplexed video information, means (7) to output the chrominance portion of a video line at a rate to result in a duration corresponding to that of the luminance portion, means (8) to process the total colour information for each line with the luminance portion of the line in its time-compressed format.

3. A television receiver according to Claim 1, characterised by means (22—27) to effect display of only the luminance portions in the video lines including means (23—25) to synchronise the start of each line scan across the screen with the beginning of the luminance portion of a video line.

4. A receiver according to Claim 3 characterised by synchronization means to initiate the line scan upon detection of the line sync pulse.

5. A receiver according to Claim 3, characterised by the synchronization means (23—25) including means (24,25) to delay initiation of the line scan by an appropriate time period.

## Patentansprüche

1. Fernsehempfänger zur Verwendung in einem Fernsehübertragungssystem, das Zeitmultiplex-Videosignale einschließt, wobei eine Videozeile zwei getrennte Zeitmultiplexteile besitzt, von denen einer eine zeitkonprimierte Chrominanzinformation und ein anderer eine zeitkomprimierte Luminanzinformation ist, gekennzeichnet durch Mittel (3—8), 22—26), um wenigstens die Luminanzteile des Videosignals zur Wiedergabe in dem zeitkomprimierten Format zu bewirken, wobei die Zeilenabtastung des Empfängers (1, 20) die gleiche Dauer hat wie der zeitkomprimiert Luminanzteil in jeder Videozeile.

2. Fernsehempfänger nach Anspruch 1, gekennzeichnet durch Mittel (7), um den Chrominanzteil von Zeilen der Zeitmultiplex-Videoinformation zu speichern, Mittel (7), um den Chrominanzteil einer Videozeile mit einer Rate auszugben, die zu einer Dauer führt, die der Dauer des Luminanzteils entspricht, Mittel (8), um die gesamte Farbinformation für jede Zeile mit dem Luminanzteil der Zeile in seinem zeitkomprimierten Format zu verarbeiten.

3. Fernsehempfänger nach Anspruch 1, gekennzeichnet durch Mittel (22—27), um die Wiedergabe nur der Luminanzteile in den Videozeilen zu bewirken, wobei Mittel (23—25) eingeschlossen sind, um den Beginn jeder Zeilenabtastung über dem Bildschirm mit dem Beginn des Luminanzteils einer Videozeile zu synchronisieren.

4. Empfänger nach Anspruch 3, gekennzeichnet durch Synchronisationsmittel zur Auslösung der Zeilenabtastung bei Feststellung des Zeilensynchronimpulses.

5. Empfänger nach Anspruch 3, gekennzeichnet dadurch, daß die Synchronizationsmittel (23—25) Mittel (24, 25) einschließen, um die Auslösung der Zeilenabtastung um eine geeignete Zeitdauer zu verzögern.

**Revendications**

1. Récepteur de télévision pour emploi dans un système de transmission par télévision incorporant des signaux vidéo à multiplexage temporel, dans lequel une ligne vidéo présente deux portions distinctes à multiplexage temporel, dont l'une contient l'information de chrominance comprimée dans le temps et l'autre l'information de luminance comprimée dans le temps, récepteur de télévision (1,20) caractérisé par des moyens (3—8, 22—26) pour traiter au moins les portions de luminance du signal vidéo pour les faire apparaitre sur l'écran en format comprimé dans le temps, des moyens (9,27) pour faire apparaitre sur l'écran au moins les portions de luminance des signaux vidéo, les signaux de luminance étant dans leur format comprimé dans le temps, le balayage d'une ligne du récepteur (1,20) ayant la même durée que celui de la portion de luminance, comprimée dans le temps, sur chaque ligne vidéo.

2. Récepteur de télévision selon la revendication 1, caractéterisé par des moyens (7) pour mémoriser la portion de chrominance des lignes d'information vidéo à multiplexage temporel, des moyens (7) pour envoyer en sortie la portion de chrominance d'une ligne vidéo à une vitesse qui se traduit par une durée correspondant à celle de la portion de luminance, des moyens (8) pour traiter l'information couleur totale pour chaque ligne, la portion de luminance de la ligne étant dans son format comprimé dans le temps.

3. Récepteur de télévision selon la revendication 1, caractéisé par des moyens (22—27) pour ne faire apparaitre sur l'écran que les portions de luminance sur les lignes vidéo comprenant des moyens (23—25) pour synchroniser le début de chaque balayage de ligne d'un bout à l'autre de l'écran avec le début de la portion de luminance d'une ligne vidéo.

4. Récepteur selon la revendication 3, caractérisé par des moyens de synchronisation pour déclencher le balayage d'une ligne lors de la détection de l'impulse de synchronisation de ligne.

5. Récepteur selon la revendication 3, caractérisé par le fait que les moyens de synchronisation (23—25) comprennent des moyens (24, 25) pour retarder, d'une période de temps appropriée, le déclenchement du balayage de la ligne.

FIG.1

FIG.2